# EUROPEAN PATENT APPLICATION

(11) **EP 4 415 422 A1**
(43) Date of publication of application: **14.08.2024**
(21) Application number: 22878372.6
(22) Date of filing: 27.09.2022
(51) Int. Cl.: H04W 28/18, H04W 28/06, H04W 72/1273, H04W 84/12

(54) **COMMUNICATION DEVICE, COMMUNICATION TERMINAL, AND COMMUNICATION METHOD**

(30) Priority: 07.10.2021 JP 2021165567
(71) Applicant: Sony Group Corporation, Tokyo 108-0075 (JP)
(72) Inventor: AIO Kosuke, Tokyo 108-0075 (JP); HANDTE Thomas, 70327 Stuttgart (DE)
(74) Representative: D Young & Co LLP
(86) International application number: PCT/JP2022/035950
(87) International publication number: WO 2023/058502

(57) **Abstract**

The present technology relates to a communication device, a communication terminal, and a communication method that enable efficient sharing of data for cooperative transmission.

A communication device divides shared data to be shared with another communication device for each information type in the shared data in order to perform cooperative transmission to a communication terminal, and generates a data unit less than or equal to a maximum transmission unit in a transmission path. The present technology can be applied to a wireless communication system.

## Description

### TECHNICAL FIELD

The present technology relates to a communication device, a communication terminal, and a communication method, and more particularly, to a communication device, a communication terminal, and a communication method capable of efficiently sharing data for cooperative transmission.

### BACKGROUND ART

In recent years, environments in which access points (hereinafter referred to as APs) of a plurality of wireless local area networks (LANs) are installed in stadiums and homes have increased, and technologies aiming at improvement of a system throughput and improvement of reliability by cooperation between APs have attracted attention.

For example, Joint Transmission (Joint Tx or JTX), which is one of cooperative schemes, is a technique that allows a plurality of APs to perform cooperative transmission to a common wireless terminal (Station, hereinafter referred to as STA) using a multi input multi output (MIMO) technique. By performing the Joint Tx, it is possible to form a highly dimensional beam without increasing the number of antennas provided in one AP.

In the Joint Tx, the same transmission signal needs to be generated for the same STA, and there are various methods. A method considered as one method is, as described in Patent Document 1, a method in which a data unit (Hereinafter, referred to as a Multi-AP (MAP)-MAC Service Data Unit (MSDU).) in a state where a certain AP has performed all the MAC processing is shared with the other AP by a backhaul link, and Joint Tx is performed.

Note that the backhaul link is a link between an AP and an AP. The link is a wired transmission path or a wireless transmission path capable of transmitting data between two communication devices.

### CITATION LIST

### PATENT DOCUMENT

Patent Document 1: WO 2021/084010 A

### SUMMARY OF THE INVENTION

### PROBLEMS TO BE SOLVED BY THE INVENTION

Since various grant information (MAC Header, CCMP Header, FCS, and the like) is added to the MAP-MSDU, the data size is larger than that of the MAP-MSDU before MAC processing. Therefore, the size of the MAP-MSDU may exceed the maximum transmission unit (MTU) size of the backhaul link that transmits the MAP-MSDU, and in this case, the MAP-MSDU is divided and transmitted.

As a method of dividing the MAP-MSDU, a first method of simply dividing the MAP-MSDU according to the MTU from the beginning is considered. However, in the case of division by the first method, when some packets are damaged during transmission on the backhaul link, it becomes difficult to decode the entire data. Furthermore, a second method of dividing each MAP-MSDU into two and transmitting the MAP-MSDUs is also conceivable. However, in a case where the division is performed by the second method, the packet interval may increase, and the transmission time may increase.

From the above, in order to efficiently share data to be subjected to coordinated transmission, there is a need for a method of efficiently dividing data so as not to exceed the MTU size of the backhaul link even when the grant information is added after the MAC processing.

The present technology has been made in view of such a situation, and enables efficient sharing of data to be subjected to cooperative transmission.

### SOLUTIONS TO PROBLEMS

A communication device according to a first aspect of the present technology includes a signal processing unit that divides shared data to be shared with another communication device for each information type in the shared data in order to perform cooperative transmission to a communication terminal, and generates a data unit less than or equal to a maximum transmission unit in a transmission path.

A communication device according to a second aspect of the present technology includes a signal processing unit that divides shared data to be shared with another communication device for each information type in the shared data in order to perform cooperative transmission to a communication terminal, and recovers the shared data from the data unit generated using the divided shared data.

A communication terminal according to a third aspect of the present technology includes a communication control unit that performs control to transmit an Ack to a designated destination when cooperative transmission packets transmitted from a plurality of communication devices are received.

In the first aspect of the present technology, shared data to be shared with another communication device in order to perform cooperative transmission to a communication terminal is divided for each type of information in the shared data, and a data unit less than or equal to a maximum transmission unit in a transmission path is generated.

In the second aspect of the present technology, shared data to be shared with another communication device in order to perform cooperative transmission to a communication terminal is divided for each information type in the shared data, and the shared data is recovered from the data unit generated using the divided shared data, the data unit being less than or equal to a maximum transmission unit in a transmission path.

In the third aspect of the present technology, when cooperative transmission packets transmitted from a plurality of communication devices are received, control is performed to transmit an Ack to a designated destination.

### BRIEF DESCRIPTION OF DRAWINGS

Fig. 1 is a diagram illustrating a configuration example of a wireless communication system according to an embodiment of the present technology.
Fig. 2 is a block diagram illustrating a configuration example of a communication device operating as an AP.
Fig. 3 is a block diagram illustrating a configuration example of a data processing unit in Fig. 2.
Fig. 4 is a block diagram illustrating a configuration example of a communication device operating as an STA.
Fig. 5 is a diagram illustrating a packet image inside the AP when data sharing for Joint Tx is performed.
Fig. 6 is a diagram illustrating the number of sizes that can be taken by each unit in Fig. 5.
Fig. 7 is a diagram illustrating an overall sequence according to the embodiment of the present technology.
Fig. 8 is a diagram illustrating a first generation example of a MAP-MSDU.
Fig. 9 is a diagram illustrating a second generation example of the MAP-MSDU.
Fig. 10 is a diagram illustrating an example of recovery of the MAP-MSDU generated in the first generation example of Fig. 8.
Fig. 11 is a diagram illustrating an example of recovery of the MAP-MSDU generated in the second generation example of Fig. 9.
Fig. 12 is a diagram illustrating a configuration example of MAP Info.
Fig. 13 is a diagram illustrating a configuration example of a MAP-MSDU frame.
Fig. 14 is a diagram illustrating a configuration example of a MAP-MSDU Response frame.
Fig. 15 is a diagram illustrating a configuration example of an Ack Information frame.
Fig. 16 is a flowchart explaining processing of an AP1 that transmits a MAP-MSDU.
Fig. 17 is a flowchart explaining processing of an AP2 that performs Joint Tx from reception of a MAP-MSDU in response to a request from the AP1.
Fig. 18 is a flowchart explaining processing of an STA that receives a data signal by Joint Tx.
Fig. 19 is a block diagram illustrating a configuration example of a computer.

### MODE FOR CARRYING OUT THE INVENTION

Hereinafter, modes for carrying out the present technology will be described. The description will be given in the following order.
1. System configuration and device configuration
2. Embodiments of the present technology
3. Others

### <1. System configuration and device configuration>

### <System configuration>

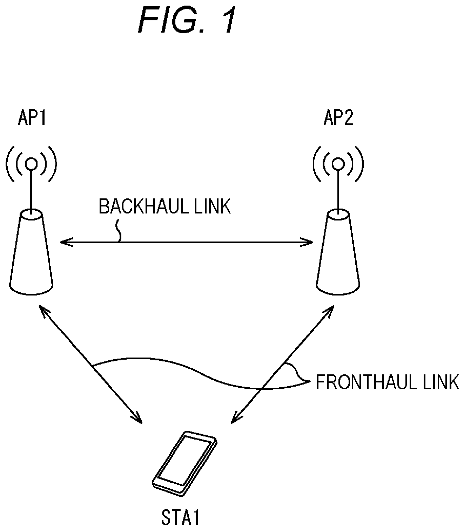

Fig. 1 is a diagram illustrating a configuration example of a wireless communication system according to an embodiment of the present technology.

A wireless communication system 1 of Fig. 1 includes two AP1 and AP2, and one STA1.

The STA1 is connected to the AP1 by wireless communication, but when Joint Tx is performed, the STA1 receives not only a transmission signal from the AP1 but also a transmission signal from the AP2.

Note that, in Fig. 1, the link between the AP1 and the AP2 is referred to as a backhaul link, and the link between the AP1 and the STA1 and the link between the AP2 and the STA1 is referred to as a fronthaul link. The communication form of the backhaul link is not particularly limited, but a wired LAN cable is used for the backhaul link below unless otherwise specified.

Furthermore, the target system configuration is not limited to this, and it is sufficient that there is a plurality of communication devices to which connection is established, and a communication device exists as a peripheral terminal for each communication device, and the positional relationship does not matter as long as the above-described condition is satisfied.

### <Configuration of communication device>

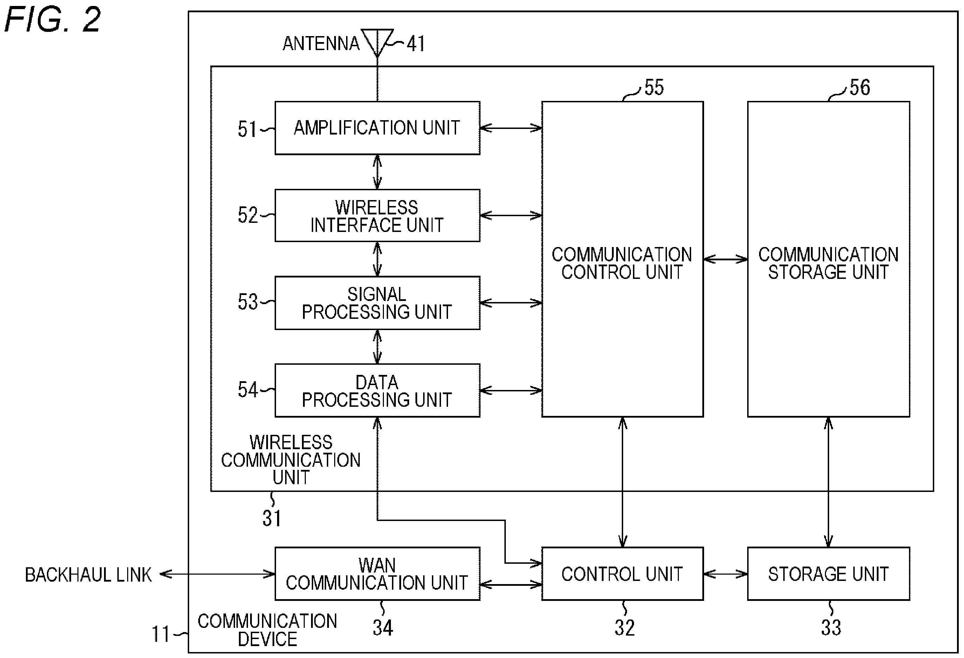

Fig. 2 is a block diagram illustrating a configuration example of a communication device operating as an AP.

A communication device 11 includes a wireless communication unit 31, a control unit 32, a storage unit 33, a wide area network (WAN) communication unit 34, and an antenna 41.

The wireless communication unit 31 transmits and receives data. The wireless communication unit 31 includes an amplification unit 51, a wireless interface unit 52, a signal processing unit 53, a data processing unit 54, a communication control unit 55, and a communication storage unit 56.

The wireless communication unit 31 includes only one set of the amplification unit 51, the wireless interface unit 52, the signal processing unit 53, and the data processing unit 54 as a minimum configuration, but may include a plurality of the antennas 41 and the amplification unit 51 to enable MIMO transmission/reception processing. Furthermore, the wireless communication unit 31 may have a configuration capable of operating a plurality of links or a plurality of frequency channels in parallel.

At transmission, the amplification unit 51 amplifies an analog signal supplied from the wireless interface unit 52 to a predetermined power, and outputs the analog signal with the amplified power to the antenna 41. At reception, the amplification unit 51 amplifies an analog signal supplied from the antenna 41 to a predetermined power, and outputs the analog signal with amplified power to the wireless interface unit 52.

A part of the function of the amplification unit 51 may be included in the wireless interface unit 52. Furthermore, a part of the function of the amplification unit 51 may be a component outside the wireless communication unit 31.

At transmission, the wireless interface unit 52 converts a transmission symbol stream from the signal processing unit 53 into an analog signal, performs filtering, up-conversion to a carrier frequency, and phase control, and outputs the analog signal after the phase control to the amplification unit 51.

At the time of reception, the wireless interface unit 52 performs phase control, down-conversion, and reverse filtering on an analog signal supplied from the amplification unit 51, and outputs a reception symbol stream as a result of conversion into a digital signal to the signal processing unit 53.

At the time of transmission, the signal processing unit 53 performs encoding, interleaving, modulation, and the like on a data unit supplied from the data processing unit 54, adds a physical header, and outputs a transmission symbol stream to each wireless interface unit 52.

At the time of reception, the signal processing unit 53 analyzes the physical header of the reception symbol stream supplied from each wireless interface unit 52, performs demodulation, deinterleaving, decoding, and the like on the reception symbol stream, and generates a data unit. The generated data unit is output to the data processing unit 54.

Note that the signal processing unit 53 performs complex channel characteristic estimation and spatial separation processing as necessary.

At the time of transmission, the data processing unit 54 performs sequence management and encryption processing of data held in the communication storage unit 56 and a control signal and management information received from the communication control unit 55. After the encryption processing, the data processing unit 54 adds a media access control (MAC) header and an error detection code, generates a packet, and performs a plurality of aggregation processing on the packet.

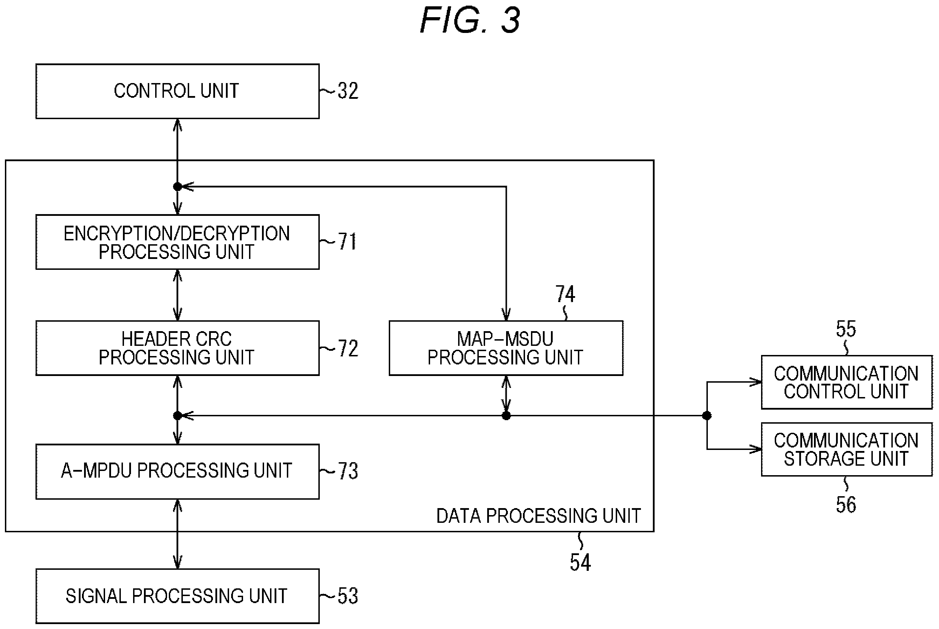

At the time of reception, the data processing unit 54 performs de-aggregation processing, analysis and error detection of the MAC headers of the received packets, a retransmission request operation, and reorder processing. Furthermore, the data processing unit 54 of the present technology includes a MAP-MSDU processing unit (MAP-MSDU Processing) 74 described below with reference to Fig. 3.

The communication control unit 55 controls operation of each unit of the wireless communication unit 31 and information transmission between the units. Furthermore, the communication control unit 55 performs control to transfer to the data processing unit 54 a control signal and management information notification of which is to be provided to another communication device.

The communication storage unit 56 holds information to be used by the communication control unit 55. Furthermore, the communication storage unit 56 holds a packet to be transmitted and a received packet. A transmission buffer that holds packets to be transmitted is included in the communication storage unit 56.

There may be a plurality of the wireless communication units 31. For example, communication between the AP and the AP and communication between the AP and the STA may be performed using different wireless communication units 31.

Furthermore, a plurality of the same blocks may exist in one wireless communication unit 31. For example, the wireless communication unit 31 may include a plurality of the wireless interface units 52, the amplification units 51, and the antennas 41 for MIMO communication. Moreover, in order to support multi-link communication, in the wireless communication unit 31, the data processing unit 54 may be divided in the middle, and there may be a plurality of subsequent processing units (a part of the data processing unit 54, the signal processing unit 53, the wireless interface unit 52, and the amplification unit 51).

The control unit 32 is constituted by a central processing unit (CPU), a read only memory (ROM), a random access memory (RAM), and the like. The control unit 32 executes a program stored in the ROM or the like, and controls the wireless communication unit 31 and the communication control unit 55. Furthermore, the control unit 32 may also perform part of the operation of the communication control unit 55. Furthermore, the communication control unit 55 and the control unit 32 may be configured as one block.

The storage unit 33 holds information used by the wireless communication unit 31 and the control unit 32. Furthermore, the storage unit 33 may also perform part of the operation of the communication storage unit 56. The storage unit 33 and the communication storage unit 56 may be configured as one block.

The WAN communication unit 34 analyzes the packet acquired from the backhaul link, and transfers the analyzed packet to the wireless communication unit 31 via the control unit 32. The format of the transferred packet may be a state in which the IP Header is left as it is (access point mode) or a state in which the IP Header is analyzed and removed by the WAN communication unit 34 (router mode).

Note that Fig. 2 illustrates an example in which the wireless communication unit 31 is configured as one IC, but the IC configuration of the present technology is not limited thereto. For example, the wireless interface unit 52 may be mounted as an IC different from the IC of the wireless communication unit 31.

### < Configuration of data processing unit >

Fig. 3 is a block diagram illustrating a configuration example of the data processing unit 54 in Fig. 2.

The data processing unit 54 includes an encryption/decryption processing unit (Encryption/Decryption) 71, a header and CRC processing unit (MPDU Header + CRC Creation/Validation) 72, an A-MPDU processing unit (A-MPDU Aggregation/De-aggregation) 73, and the MAP-MSDU processing unit 74.

The encryption/decryption processing unit 71 encrypts data generated by the control unit 32 or decrypts a received packet. A public key and a private key used for encryption or decryption are acquired in advance by information exchange with the STA.

Furthermore, the encryption/decryption processing unit 71 adds or decrypts header information (Hereinafter, in the present embodiment, a CCMP Header) necessary for encryption or decryption.

The header and CRC processing unit 72 adds or decrypts header information (MAC Header) in the MAC layer and a cyclic redundancy check code (Cyclic Redundancy Check (CRC)) for error detection to a packet to be transmitted.

For example, in a case where the header and CRC processing unit 72 determines that the received packet is not a packet addressed to itself by using header information (MAC Header) at the time of packet reception, or in a case where CRC is confirmed and a packet error is confirmed, the header and CRC processing unit performs an operation of discarding the received packet. Note that an algorithm used for error detection is not necessarily CRC.

Hereinafter, a state in which the MAC header and the correction code are added to the encrypted packet is referred to as a MAC protocol data unit (MPDU).

The A-MPDU processing unit 73 performs aggregation processing (aggregation) of a packet (MPDU) to be transmitted and division processing (de-aggregation) of a received packet (A-MPDU).

An A-MPDU Delimiter is added to the head of a packet to be concatenated, and the communication device on a reception side can divide the A-MPDU into a plurality of MPDUs by using the A-MPDU Delimiter.

Note that, depending on the transmission method, only one MPDU may be transmitted and received, and in this case, the processing in the A-MPDU processing unit 73 is omitted. The A-MPDU is directly exchanged with the signal processing unit 53.

In order to implement the Joint Tx, the MAP-MSDU processing unit 74 performs processing on a plurality of MPDUs to share data with other APs, and performs processing of generating a sharing packet (MAP-MSDU). Alternatively, the MAP-MSDU processing unit 74 performs processing of recovering a shared MAP-MSDU to a plurality of MPDUs in order to implement the Joint Tx.

Conventionally, it has been assumed that MAP Info in which information for cooperation is described is added to each MPDU or the A-MPDU itself, but the present technology is characterized by performing fragment (division) processing in consideration of the MTU of the transmission path as described above.

Note that, since the MAP-MSDU processing unit 74 starts processing as necessary, the MPDU to be input and output may be temporarily stored in the communication storage unit 56 via the communication control unit 55. Furthermore, also in the AP that acquires the MAP-MSDU, the MAP-MSDU may be stored in the communication storage unit 56 via the communication control unit 55 as necessary.

### <Configuration of communication device>

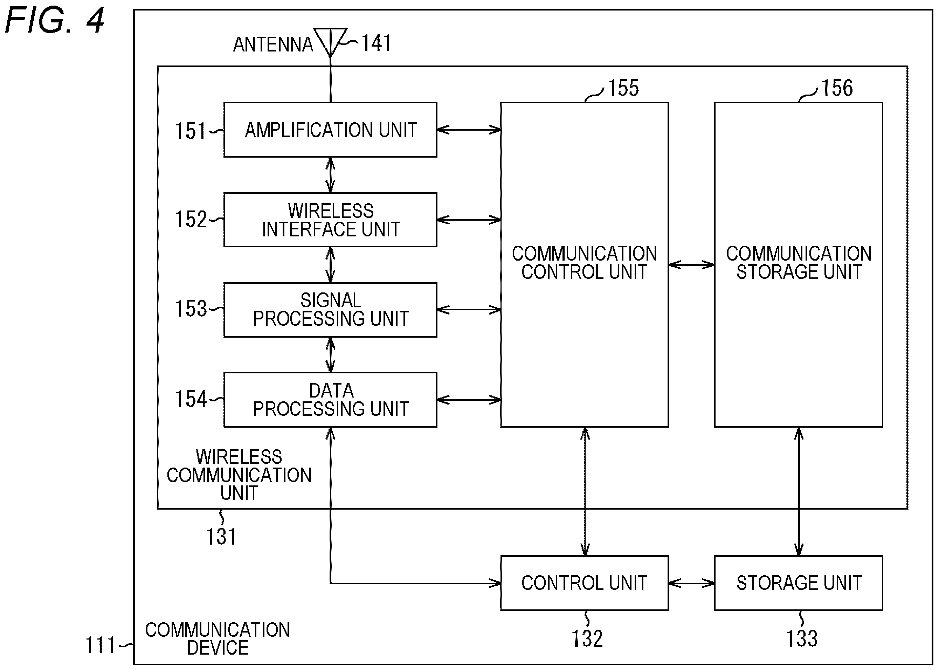

Fig. 4 is a block diagram illustrating a configuration example of a communication device operating as an STA.

A communication device 111 includes a wireless communication unit 131, a control unit 132, a storage unit 133, and an antenna 141.

The control unit 132, the storage unit 133, and the antenna 141 in Fig. 4 have configurations similar to the control unit 32, the storage unit 33, and the antenna 41 in Fig. 2.

The wireless communication unit 131 includes an amplification unit 151, a wireless interface unit 152, a signal processing unit 153, a data processing unit 154, a communication control unit 155, and a communication storage unit 156.

The amplification unit 151, the wireless interface unit 152, the signal processing unit 153, the data processing unit 154, the communication control unit 155, and the communication storage unit 156 in Fig. 4 have configurations similar to the amplification unit 51, the wireless interface unit 52, the signal processing unit 53, the data processing unit 54, the communication control unit 55, and the communication storage unit 56 in Fig. 2.

Note that the wireless communication unit 131 includes only one set of the amplification unit 151, the wireless interface unit 152, the signal processing unit 153, and the data processing unit 154 as a minimum configuration, but may include a plurality of the antennas 141 and the amplification unit 151 to enable MIMO transmission/reception processing. Furthermore, the wireless communication unit 131 may have a configuration capable of operating a plurality of links or a plurality of frequency channels in parallel.

### <Prior art>

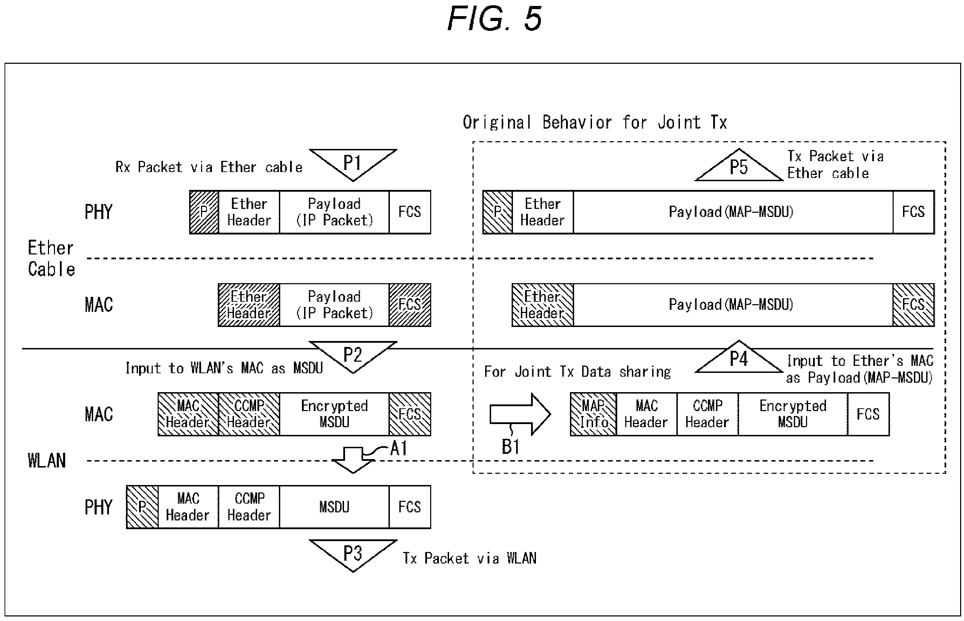

Fig. 5 is a diagram illustrating a packet image inside an AP when data sharing for Joint Tx is performed.

First, as indicated by an arrow P1, the AP acquires a packet to be transmitted to the STA from a backhaul link (Ether cable).

At this time, in a PHY layer of Ether, a Payload (IP Packet) is received in a state where a PHY Preamble indicated by P in the drawing, an Ether Header, and a Frame Check Sequence (FCS: CRC is generally used) are added thereto, and the PHY Preamble is decrypted and deleted in the PHY layer and the Ether Header and the FCS are decrypted and deleted in the MAC layer.

In a case where it is determined from the decrypted information that the packet itself is not a destination packet, or in a case where a packet error is confirmed, the packet is discarded without being transferred to a subsequent unit.

Next, as indicated by an arrow P2, the AP encrypts the IP Packet (MSDU) acquired from the Ether/MAC layer in a WLAN/MAC layer inside the AP, and adds a CCMP Header, a MAC Header, and an FCS, respectively (data in this state is referred to as an MPDU).

Thereafter, in a case where the MPDU is transmitted to the STA, as indicated by an arrow Al, the AP passes the MPDU or an A-MPDU obtained by concatenating a plurality of the MPDUs to the PHY layer, adds a PHY preamble, and transmits the MPDU or the plurality of MDPUs to the STA.

On the other hand, in a case where the MPDU is shared with another AP, the AP adds MAP Info to the MPDU as indicated by an arrow B1, and again transfers the MPDU as a MAP-MSDU to the Ether/MAC layer which is a backhaul link.

As indicated by an arrow P4, in the Ether/MAC layer, Ether Header and FCS are added to Payload (MAP-MSDU) contrary to the case indicated by the arrow P1, and further, a PHY Preamble is added in the Ether/PHY layer. Then, as indicated by an arrow P5, the AP transmits the MAP-MSDU to another AP via the Ether cable.

Note that even if the backhaul link is in another communication scheme, the MAP-MSDU is transmitted to another AP through a similar procedure.

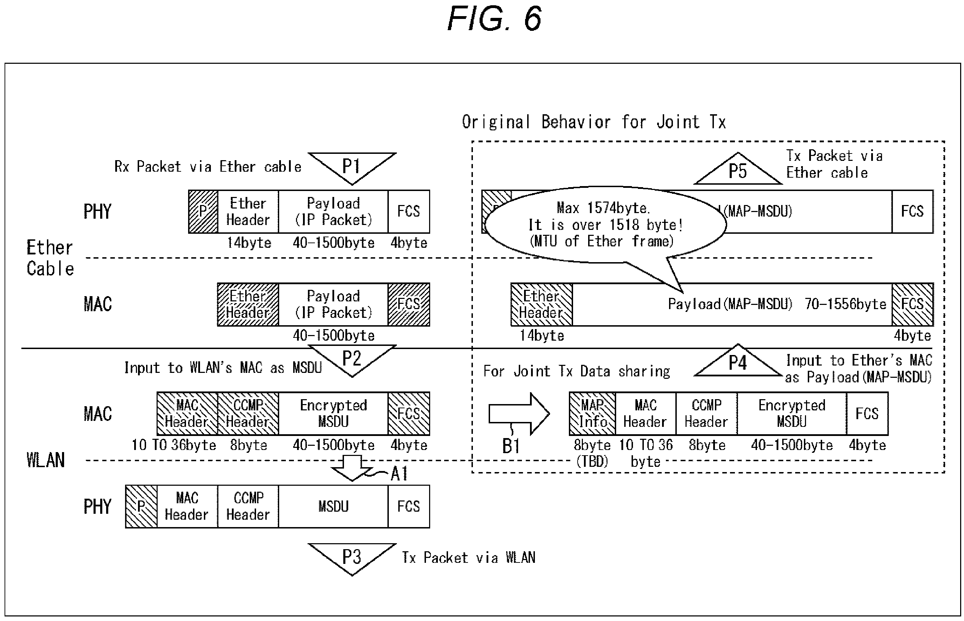

Fig. 6 is a diagram illustrating the number of sizes that can be taken by each unit in Fig. 5.

In the Ether cable, the maximum communicable MTU size is defined as 1518 bytes according to the standard. Therefore, when 14 bytes of Ether Header and 4 bytes of FCS are excluded, the payload size needs to be 1500 bytes or less.

On the other hand, in the MAP-MSDU, it is necessary to add various headers and FCS to this packet. As indicated by the arrow P4, in a case where various headers or FCSs are added to the packet, the size thereof is 1556 bytes at the maximum (when MAP Info is assumed to be 10 bytes), which greatly exceeds the MTU size of the Ether cable.

Therefore, in a case where the packet first acquired by the Ether cable is almost the same as the MTU size, the AP cannot adopt a system of attaching MAP Info to each MPDU and transmitting the MPDU as indicated by the arrow B1, and needs to divide the MPDU not a little so as to match the MTU size.

As a method of division, several methods are conceivable.

A Method 1 is a method of dividing the MPDU into two in a state where MAP Info is added to the MPDU.

Although the Method 1 is very simple and easy to implement, since the number of MAP-MSDUs is twice the number of MPDUs to be transmitted as it is, there is a concern that overhead due to a division header and a frame interval increases and transmission efficiency deteriorates. In the Joint Tx, since it becomes difficult to reduce overhead at the time of data sharing, it is not desirable to adopt a method of decreasing transmission efficiency even in a wired cable.

A Method 2 is a method in which the MAP-MSDU processing unit 74 concatenates all MPDUs desired to be transmitted once to generate an A-MPDU, and divides the A-MPDU from the end to match the MTU.

In the case of the Method 2, the MAP-MSDU remains at the number of MPDUs + α, and overhead may not be a significant problem compared to the Method 1. However, in the case of the Method 2, if any one MAP-MSDU is damaged, it becomes difficult to recover the entire MAP-MSDU, and error concealment in the damaged packet becomes difficult.

In view of the above, regarding the generation of MAP-MSDU, it is desirable to satisfy two points of (1) minimizing the number of divisions and (2) facilitating error concealment.

Therefore, in the present technology, there is proposed a method of satisfying the requirements (1) and (2) described above by performing predetermined division on the MPDU using the fact that header information of the MPDU to be transmitted to another AP is substantially the same.

As a result, data to be subjected to cooperative transmission can be efficiently shared.

### <2. Embodiments of the present technology>

### <Overall sequence>

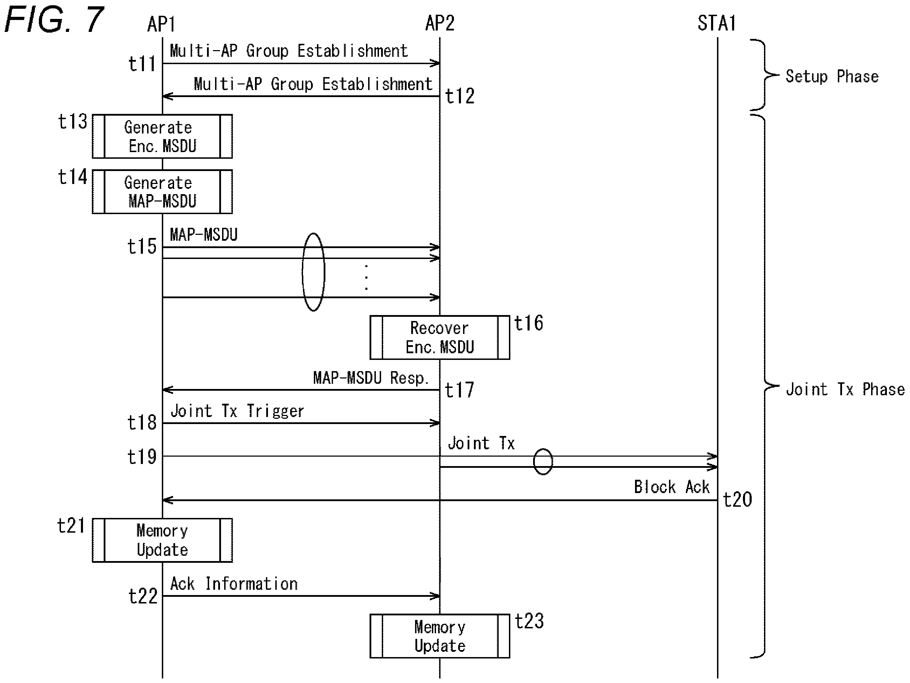

Fig. 7 is a diagram illustrating an overall sequence according to an embodiment of the present technology.

In Fig. 7, processing at timings t11 and t12 is processing of a Setup Phase. Processing from timings t13 to t23 is processing of a Joint Tx Phase.

The Setup Phase is a phase in which each AP performs setting (Multi-AP Group Establishment) to be an AP group that performs a cooperative operation.

That is, at timings t11 and t12, the AP1 and the AP2 exchange information necessary for the Joint Tx, for example, Capability information, the number of transmission antennas, flag information indicating whether or not the Joint Tx is possible, identification numbers of subordinate STAs, and the like.

Furthermore, at the timings t11 and t12, information groups necessary for the present technology, such as the Capability information indicating whether or not the MAP-MSDU described above in Fig. 5 can be transmitted or received or the memory capacity for storing the MAP-MSDU, are also exchanged.

The Joint Tx Phase is a phase in which data transmission by the Joint Tx is performed around the AP (In the case of Fig. 7, AP1) that has acquired the transmission right.

That is, at the timing t13, the AP1 performs the MAC processing on a packet (MSDU) for which data transmission by the Joint Tx is desired to be performed, and generates an MPDU (or encrypted MSDU) (Generate Enc. MSDU).

At the timing t14, the AP1 generates a MAP-MSDU from the generated one or more MPDUs (or encrypted MSDUs) (Generate MAP-MSDU).

At the timing t15, the AP1 transmits the generated MAP-MSDU to the AP2 via the backhaul link.

The AP2 receives the MAP-MSDU and recovers the MPDU (or encrypted MSDU) from the received MAP-MSDU at the timing t16 (Recover Enc. MSDU).

At the timing t17, the AP2 transmits a response signal to the AP1 in order to respond to the reception situation (MAP-MSDU Resp.).

At the timing t18, the AP1 transmits the Joint Tx Trigger to the AP2, and notifies the AP2 of information necessary for the Joint Tx (modulation method, coding method, and the like).

At the timing t19, the AP1 and the AP2 simultaneously perform the Joint Tx and transmit data to the STA.

At the timing t20, the STA transmits a response signal (Block Ack) to the AP1.

The AP1 receives the response signal and removes the MPDU that has been successfully received from the memory at the timing t21 (Mamory Update).

At the timing t22, the AP1 notifies the AP2 of information (Ack Information) similar to the received response signal.

At the timing t23, the AP2 removes the MPDU that has been successfully received from the memory on the basis of the information notified from the AP1.

The above sequence is the basic operation of the present technology. Note that the present technology is not limited to the example of Fig. 7, and for example, the following operation may be performed.

The sharing of MAP-MSDUs may not necessarily be implemented in the same Joint Tx Phase. In a case where the backhaul link can operate in parallel with the fronthaul link, sharing of the MAP-MSDU may be completed in advance before entering the Joint Tx Phase.

In order to determine to which AP and which STA to perform data transmission before starting transmission of the MAP-MSDU, the AP1 may collect information from the AP2 or another AP.

In a case where there is data to be transmitted from the AP2 through the Joint Tx, the AP2 may transmit the MAP-MSDU to the AP1. In this case, the AP2 may negotiate with the AP1 in advance to which STA the data transmission is to be performed, and the negotiation may be performed on condition that permission is given from the AP1.

If possible, the AP2 may also receive Block Acks from the STAs. In this case, the Ack Information from the AP1 becomes unnecessary, and conversely, the Ack Information may be notified from the AP2 to the AP1. Note that these operations may be determined by the AP1 and the AP2 in the Setup Phase described above.

Depending on the type of memory, the AP2 may store the MAP-MSDU as it is and recover it to the MPDU before implementing Joint Tx (for example, when Joint Tx Trigger is received).

Note that Fig. 7 illustrates an example in which the Joint Tx is implemented by the two APs, but the Joint Tx may be implemented by three or more APs.

### < First generation example of MAP-MSDU >

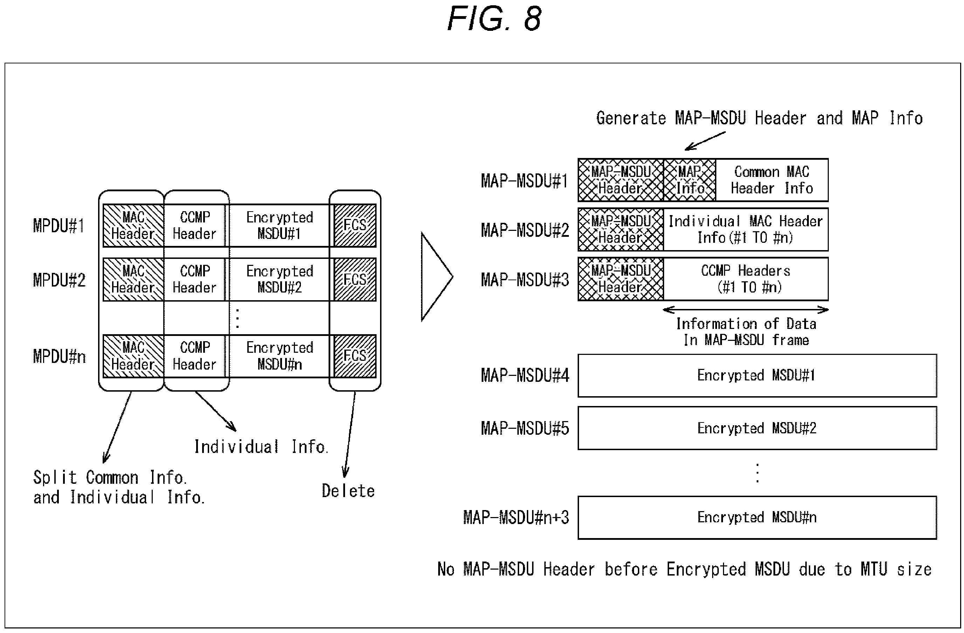

Fig. 8 is a diagram illustrating a first generation example of a MAP-MSDU.

Fig. 8 illustrates an example of a case where a size of an Encrypted MSDU (encrypted MSDU) is almost the MTU size of the backhaul link.

For example, the AP wants to transmit n MPDUs to other APs for the Joint Tx. Conventionally, a method of generating an A-MPDU in which the n MPDUs are concatenated and dividing the A-MPDU from the end so as to fall below the MTU size of the backhaul link has been common.

However, in the conventional case, as described above, when any one MAP-MSDU is damaged, it is difficult to recover the entire MAP-MSDU, and it is difficult to perform error concealment in the damaged packet.

Therefore, as illustrated in Fig. 8, the data processing unit 54 of the AP1 divides the MPDU for each information type in the MPDU to generate a MAP-MSDU.

The left side of Fig. 8 illustrates a configuration of the MPDU and a division example thereof.

MPDUs #1 to #n are illustrated in order from the top.

Each of the MPDUs #1 to #n includes a MAC Header, a CCMP Header, each of Encrypted MSDUs #1 to #n, and an FCS.

In the case of Fig. 8, in the MPDUs #1 to #n, each piece of information of the MAC Header and the CCMP Header as header information, the Encrypted MSDUs #1 to #n as payload information, and the FCS is divided for each information type. Furthermore, in each field in the MAC Header, each piece of information is divided into common information or individual information of all packets and handled.

Here, the common information is, for example, a receiver address (RA), a transmitter address (TA), a duration, or the like. The individual information is, for example, Sequence Number.

Since the CCMP Header is different information for each packet, all the CCMP Headers are treated as individual information. The FCS includes several options, but is temporarily deleted in the example of Fig. 8. That is, the FCS is recalculated in a reception destination AP.

A first configuration example of a MAP-MSDU generated by dividing the MPDU is illustrated on the right side of Fig. 8.

Configuration examples of MAP-MSDU #1, MAP-MSDU #2, MAP-MSDU #3, and MAP-MSDUs #4 to #n+3 are illustrated in order from the top.

The MAP-MSDU #1 includes a MAP-MSDU Header, MAP Info, and Common MAC Header Info.

The MAP-MSDU #2 includes a MAP-MSDU Header and Individual MAC Header Info of #1 to #n.

The MAP-MSDU #3 includes a MAP-MSDU Header and CCMP Headers of #1 to #n.

The MAP-MSDUs #4 to #n+3 include Encrypted MSDUs.

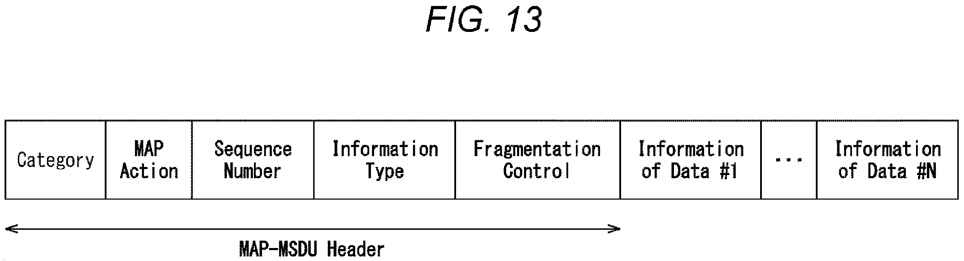

The MAP-MSDU Header is header information for cooperation, and is an information group added to each MAP-MSDU. The MAP-MSDU Header includes information such as a sequence number and an information type used for the MAP-MSDU. Details of the MAP-MSDU Header are described later with reference to Fig 13.

Note that, originally, this MAP-MSDU Header should be added to all MAP-MSDUs. However, for example, in a case where the size of the Encrypted MSDU is almost the MTU size of the backhaul link, and there is a possibility that the MTU size is exceeded when the header is added, the MAP-MSDU Header may not be added to the Encrypted MSDU as in the MAP-MSDU #4 to #n+3 in Fig. 8. In this case, even if some MAP-MSDUs are damaged, since the sequence number cannot be notified, there is a high possibility that the MAP-MSDUs cannot be effectively retransmitted.

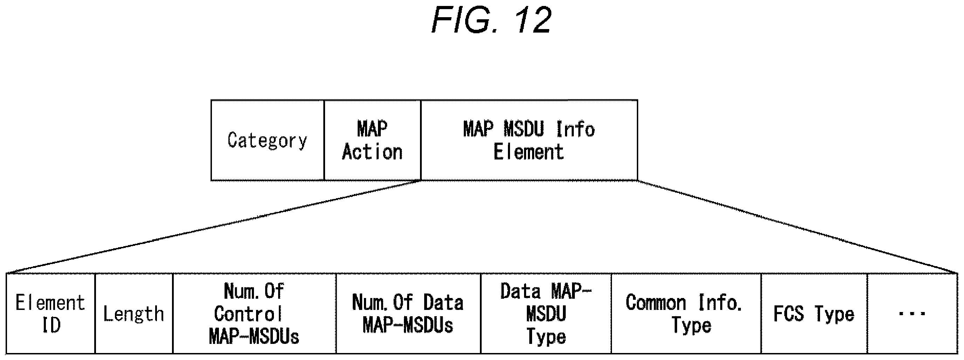

The MAP Info includes an information group indicating a configuration method of a MAP-MSDU. Details of the MAP Info will be described later with reference to Fig. 12.

The Common MAC Header Info includes common information divided in each field in the MAC Header on the left side of Fig. 8.

The Individual MAC Header Info includes individual information divided in each field in the MAC Header on the left side of Fig. 8.

The CCMP Header includes individual information in the CCMP Header on the left side of Fig. 8.

Note that the configuration example of Fig. 8 is an example. For example, in a case where the number of MPDUs is small, it is also conceivable that the MAP-MSDU #1 and the MAP-MSDU #2 in Fig. 8 are transmitted as the same MAP-MSDU. Conversely, in a case where the number of MPDUs is large, it is also conceivable that MAP-MSDU #2, MAP-MSDU #3, or the like is divided and transmitted as two or more MAP-MSDUs. At that time, the information regarding the division is notified by the MAP-MSDU Header.

Note that, in the present embodiment, general CCMP will be described as an example of the encryption algorithm, but another encryption algorithm (for example, TKIP) may be used. In this case, only the name and contents of the "CCMP Header" of the present embodiment are changed, and there is no particular influence on the method of generating the MAP-MSDU.

### < Second generation example of MAP-MSDU >

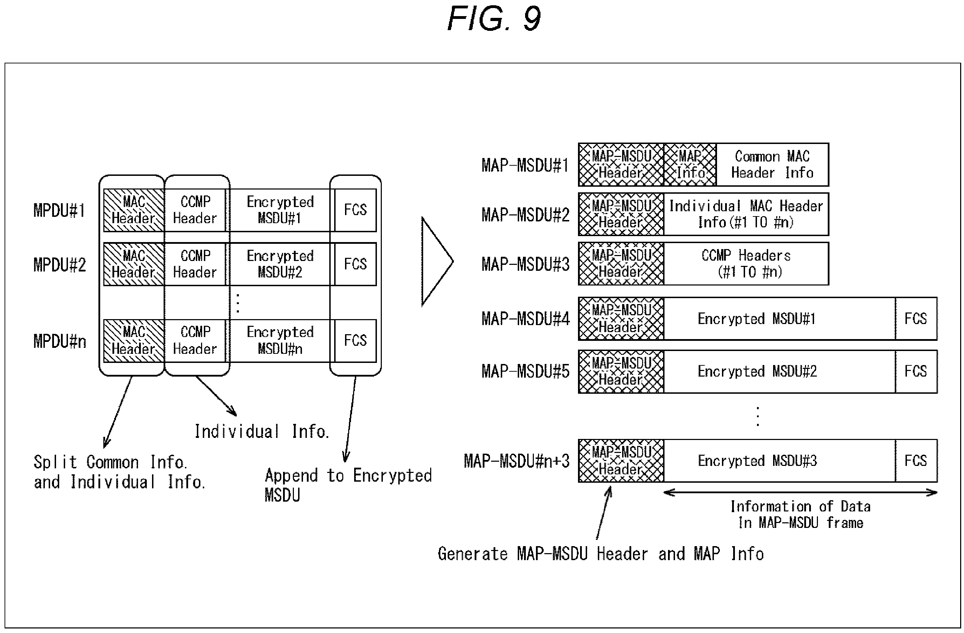

Fig. 9 is a diagram illustrating a second generation example of the MAP-MSDU.

Fig. 9 illustrates an example of a case where a size of the Encrypted MSDU has a margin compared with the MTU size of the backhaul link.

Similarly to the left side of Fig. 8, the left side of Fig. 9 illustrates a configuration of the MPDU and a division example thereof.

A second configuration example of the MAP-MSDU generated by dividing the MPDU is illustrated on the right side of Fig. 9.

Configuration examples of MAP-MSDU #1, MAP-MSDU #2, MAP-MSDU #3, and MAP-MSDUs #4 to #n+3 are illustrated in order from the top.

The MAP-MSDU #1 includes a MAP-MSDU Header, MAP Info, and Common MAC Header Info.

The MAP-MSDU #2 includes a MAP-MSDU Header and Individual MAC Header Info of #1 to #n.

The MAP-MSDU #3 includes a MAP-MSDU Header and CCMP Headers of #1 to #n.

Each of the MAP-MSDUs #4 to #n+3 includes a MAP-MSDU Header, an Encrypted MSDU, and an FCS.

In Fig. 9, unlike Fig. 8, by transmitting all MAP-MSDUs to the Encrypted MSDU with the MAP-MSDU Header or the FCS added thereto, even if the MAP-MSDU is partially damaged, it is possible to notify a reception destination AP of the sequence number of the damaged MAP-MSDU and retransmit only necessary information.

Furthermore, in the case of Fig. 9, since the reception destination AP does not need to calculate the FCS, power saving is also achieved.

Note that the FCS does not necessarily have to be added to the Encrypted MSDU, and for example, n pieces of information may be collectively notified like the CCMP Header.

As described above, there are several variations in the method of adding the FCS or the MAP-MSDU Header. Information on which method to use is notified by the MAP Info described above. Conditions for selecting which method may be left to, for example, an error occurrence rate of the backhaul link or calculation capability between the APs. Furthermore, the conditions may be determined by the standard, may be determined by the device itself, or may be set by a user. Examples of the conditions are shown below, for example.
(1) In a case where the MTU size of the backhaul link is exceeded even if any one of the FCS and the MAP-MSDU Header is added to the Encrypted MSDU, a Data MAP-MSDU is only the Encrypted MSDU. The Data MAP-MSDU indicates a MAP-MSDU that transmits a payload (Encrypted MSDU).
(2) In a case other than the above (1), only when the MTU size of the backhaul link or less is achieved, the following information (a) or (b) may be added to the Encrypted MSDU.

(a) In a case where the packet error rate of the backhaul link is x% or less, the MAP-MSDU is allocated to the Encrypted MSDU (x may be a device eigenvalue or a value defined in a standard.).
(b) In a case where there is no problem in the calculation load capability of the AP2 (For example, the AP2 is not operating in the low power consumption mode.), an FCS is assigned to the Encrypted MSDU (Note that it is assumed that the information regarding the calculation load capability of the AP2 and the operation mode can be acquired in advance.).

### < First recovery example of MAP-MSDU >

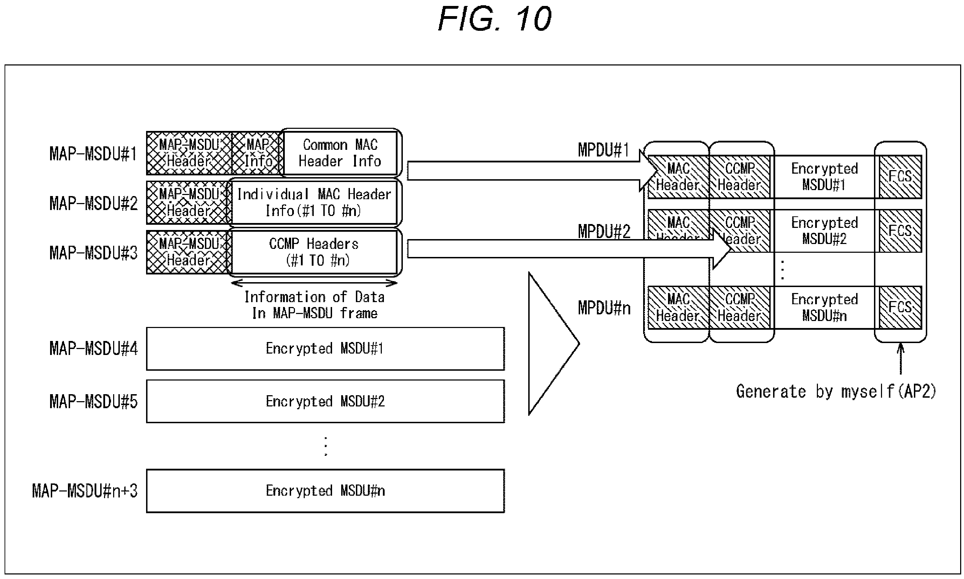

Fig. 10 is a diagram illustrating a recovery example of the MAP-MSDU generated by the first generation example of Fig. 8.

A first configuration example of the MAP-MSDU is illustrated on the left side of Fig. 10.

Configuration examples of MAP-MSDU #1, MAP-MSDU #2, MAP-MSDU #3, and MAP-MSDUs #4 to #n+3 are illustrated in order from the top.

The MAP-MSDU #1 includes a MAP-MSDU Header, MAP Info, and Common MAC Header Info.

The MAP-MSDU #2 includes a MAP-MSDU Header and Individual MAC Header Info of #1 to #n.

The MAP-MSDU #3 includes a MAP-MSDU Header and CCMP Headers of #1 to #n.

The MAP-MSDUs #4 to #n+3 include Encrypted MSDUs.

The right side of Fig. 10 illustrates how to recover the MPDU using the MAP-MSDU on the left side of Fig. 10.

Configuration examples of the MPDUs #1 to #n are illustrated in order from the top.

Each of the MPDUs #1 to #n includes a MAC Header, a CCMP Header, each of Encrypted MSDUs #1 to #n, and an FCS.

That is, the MAC Header of the MPDUs #1 to #n is recovered from the Common MAC Header Info of the MAP-MSDU #1 and the Individual MAC Header Info of #1 to #n of the MAP-MSDU #2.

The CCMP Headers of MPDUs #1 to #n are recovered from the CCMP Header of #1 to #n of the MAP-MSDU #2.

The Encrypted MSDUs of MPDUs #1 to #n are recovered from the Encrypted MSDUs of the MAP-MSDUs #4 to #n+3.

Note that the FCSs of the MPDUs #1 to #n are generated by the reception destination APs (In the case of Fig. 7, AP2) themselves.

### < Second recovery example of MAP-MSDU >

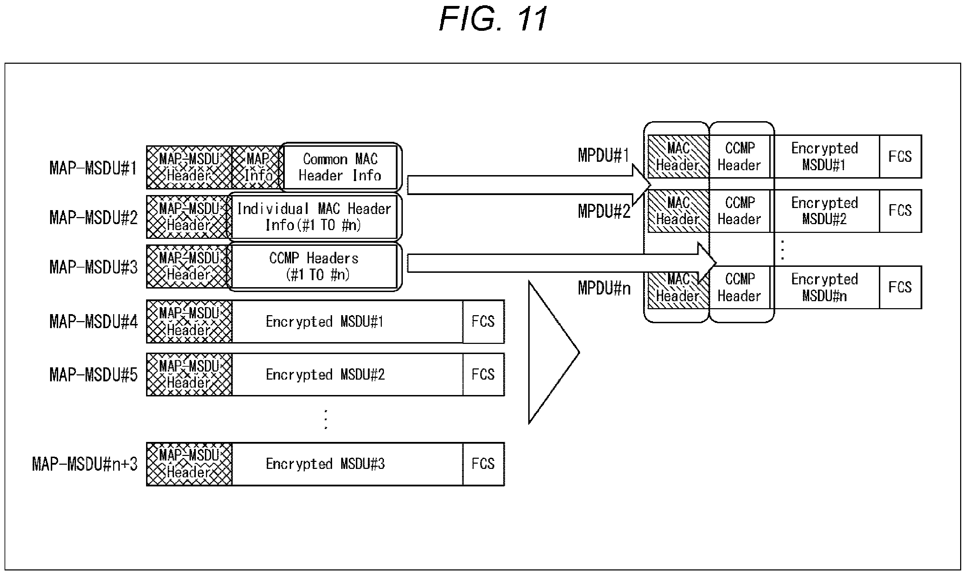

Fig. 11 is a diagram illustrating a recovery example of the MAP-MSDU generated by the second generation example of Fig. 9.

A second configuration example of the MAP-MSDU is illustrated on the left side of Fig. 11.

Configuration examples of MAP-MSDU #1, MAP-MSDU #2, MAP-MSDU #3, and MAP-MSDUs #4 to #n+3 are illustrated in order from the top.

The MAP-MSDU #1 includes a MAP-MSDU Header, MAP Info, and Common MAC Header Info.

The MAP-MSDU #2 includes a MAP-MSDU Header and Individual MAC Header Info of #1 to #n.

The MAP-MSDU #3 includes a MAP-MSDU Header and CCMP Headers of #1 to #n.

Each of the MAP-MSDUs #4 to #n + 3 include a MAP-MSDU Header, an Encrypted MSDU, and an FCS.

The right side of Fig. 11 illustrates how to recover the MPDU using the MAP-MSDU on the left side of Fig. 11.

Configuration examples of the MPDUs #1 to #n are illustrated in order from the top.

Each of the MPDUs #1 to #n includes a MAC Header, a CCMP Header, each of Encrypted MSDUs #1 to #n, and an FCS.

That is, the MAC Header of the MPDUs #1 to #n is recovered from the Common MAC Header Info of the MAP-MSDU #1 and the Individual MAC Header Info of #1 to #n of the MAP-MSDU #2.

The CCMP Headers of MPDUs #1 to #n are recovered from CCMP Header Info of #1 to #n of MAP-MSDU #2.

The Encrypted MSDUs of MPDUs #1 to #n are recovered from the Encrypted MSDUs of the MAP-MSDUs #4 to #n+3.

Note that the FCSs of the MPDUs #1 to #n notified from the transmission destination APs (in the case of Fig. 7, AP1) are used as they are.

### < Configuration of MAP Info >

Fig. 12 is a diagram illustrating a configuration example of MAP Info.

In Fig. 12, the MAP Info is illustrated on the basis of an Action frame of IEEE802.11. In the present technology, the MAP Info is not limited to the frame configuration of Fig. 12, and it is sufficient that at least the information described below is included in the frame. Furthermore, in Fig. 12, the MAP Info is described on the assumption of a MAC Frame, but may be transmitted as a TCP/IP Frame as long as the information described below is included. Note that the same applies to the subsequent drawings of the frame configuration.

The MAP Info in Fig. 12 includes a Category, a MAP Action, and a MAP-MSDU Info Element.

The MAP Action includes information indicating that this frame is MAP Info.

The MAP-MSDU Info Element includes an information group related to the MAP-MSDU.

The MAP-MSDU Info Element is configured to include Element ID, Length, Number Of Control MAP-MSDUs, Number Of Data MAP-MSDUs, Data MAP-MSDU Type, Common Info.Type, FCS Type.

The Number Of Control MAP-MSDUs is the number of portions (hereinafter referred to as Control MAP-MSDU) indicating the control information (MAC Header, CCMP Header, and the like) in the MAP-MSDU to be transmitted. The Number Of Control MAP-MSDUs is the total number of divisions of the control information. For example, in the case of Fig. 8, "3".

The Number Of Data MAP-MSDUs is the number of portions (Hereinafter referred to as Data MAP-MSDU) indicating a payload (Encrypted MSDU) in the MAP-MSDU to be transmitted. The Number Of Data MAP-MSDUs is the total number of divisions of the payload information. For example, in the case of Fig. 8, "n".

The Data MAP-MSDU Type is information indicating a configuration of data in the MAP-MSDU. The Data MAP-MSDU Type is indicated, for example, in 2 bits as follows: Note that this is not limited to the information below.

0 indicates "Encrypted MSDU".
1 indicates that "Encrypted MSDU" + "FCS".
2 indicates that "MAP-MSDU Header" + "Encrypted MSDU".
3 indicates "MAP-MSDU Header" + "Encrypted MSDU" + "FCS".

The Common Info.Type is flag information indicating a method of notifying common information of Common Info.Type: MAC Header. The Common Info.Type is indicated by 1 bit, for example, as follows. Note that this is not limited to the information below.

0 indicates that the MAC Header of the MPDU #1 is notified as it is. In this case, the reception destination AP "overwrite" the individual information for each MPDU on the basis of the Common Info.Type.

1 indicates that only the common part of the MAC Header is notified. In this case, the reception destination AP "inserts" the individual information for each MPDU on the basis of the Common Info.Type.

The FCS Type is flag information indicating whether or not to notify the FCS. For example, the FCS Type is indicated by 1 bit as follows. Note that this is not limited to the information below.

0 does not notify the FCS. In this case, the reception destination AP calculates the FCS by itself on the basis of the FCS Type. That is, in the case of 0, the FCS Type is information for requesting the reception destination AP to generate the error correction code.

1 notifies the FCS. In this case, the reception destination AP uses the notified FCS as it is on the basis of the FCS Type.

### < Configuration of MAP-MSDU frame >

Fig. 13 is a diagram illustrating a configuration example of a MAP-MSDU frame.

In Fig. 13, a MAP-MSDU frame is illustrated on the basis of an Action frame of IEEE802.11, similarly to the MAP Info in Fig. 12. Furthermore, in the MAP-MSDU frame of Fig. 13, information groups before Information of Data #1 are set as a MAP-MSDU Header.

The MAP-MSDU frame in Fig. 13 includes a Category, a MAP Action, a Sequence Number, an Information Type, Fragmentation Control, and Information of Data #1 to #n.

The MAP Action is information indicating that this frame is a MAP-MSDU frame.

The Sequence Number is a sequence number that is applied only in the MAP-MSDU. The sequence number may be uniquely determined by the transmission destination AP in the initial value, or a numerical value negotiated by both devices between the APs may be used.

The Information Type is information indicating what is included in subsequent "Information". In the Information Type, for example, the following information is indicated by several bits. Note that this is not limited to the information below.

MAP Info
Common MAC Header Info
Individual MAC Header Info
CCMP Header Info
Data
MAP Info + Common MAC Header Info
Individual MAC Header Info + CCMP Header Info
Individual MAC Header Info + Data
CCMP Header + Data
Individual MAC Header Info + CCMP Header Info + Data
   etc

The Fragmentation Control is information indicating information at the time of division (division number, final flag, and the like).

The Information of Data #n includes the information group designated by the "Information Type" described above. In the Information of Data #n, at that time, the MAP Info and the Common MAC Header are notified for one, and other information is notified for the number of MPDUs.

### < Configuration of MAP-MSDU frame >

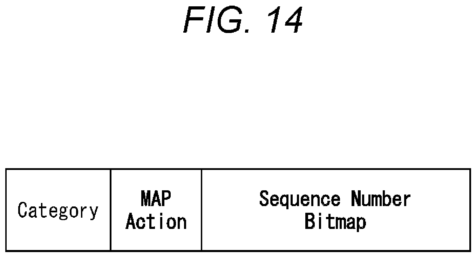

Fig. 14 is a diagram illustrating a configuration example of a MAP-MSDU Response frame.

In Fig. 14, a MAP-MSDU Response frame is illustrated on the basis of an Action frame of IEEE802.11, similarly to the MAP Info of Fig. 12.

The MAP-MSDU Response frame in Fig. 14 includes a Category, a MAP Action, and a Sequence Number Bitmap.

The MAP Action is information indicating that this frame is a MAP-MSDU Response frame.

The Sequence Number Bitmap is information for notifying the sequence number of the MAP-MSDU that has been successfully acquired.

For the Control MAP-MSDU, according to the notified sequence number, a flag of "1" is set if the reception succeeds, and a flag of "0" is set if the reception fails. The similar thing applies to a case where a MAP-MSDU Header is added to a Data MAP-MSDU.

In a case where the MAP-MSDU Header is not added to the Data MAP-MSDU, or in a case where all the Data MAP-MSDUs of the number of MPDUs are successfully received, all the Bitmaps other than the Control MAP-MSDU are set to "1". On the other hand, in a case where reception of even one of the Data MAP-MSDUs of the number of MPDUs fails, all the Bitmaps other than the Control MAP-MSDU are set to "0".

Furthermore, when the MAP-MSDU can be counted by the reception destination AP, even if the Header is not added to the Data MAP-MSDU, the sequence number may be estimated and a response may be made by this MAP-MSDU Response frame. In this case, a sender of the MAP-MSDU may utilize or ignore the estimated sequence number.

### < Configuration of Ack Information frame >

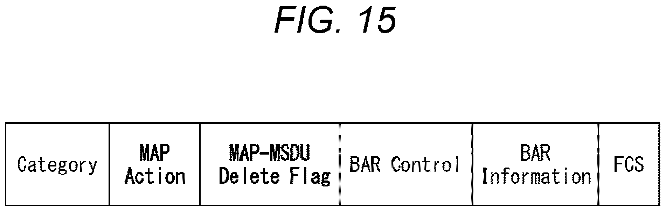

Fig. 15 is a diagram illustrating a configuration example of an Ack Information frame.

In Fig. 15, an Ack Information frame is illustrated on the basis of an Action frame of IEEE802.11, similarly to the MAP Info in Fig. 12.

The Ack Information frame in Fig. 15 includes a Category, a MAP Action, a MAP-MSDU Delete Flag, BAR Control, BAR Information, and an FCS.

The MAP Action is information indicating that this frame is Ack Information.

The MAP-MSDU Delete Flag is flag information for notifying deletion of a MAP-MSDU that will be stored. For example, in a case where a MAP-MSDU is notified but the transmission situation is poor and non-cooperative transmission is performed before performing the Joint Tx, the AP sets a MAP-MSDU Delete Flag and requests another AP to delete the stored MAP-MSDU.

The BAR Control is control information (conforming to the standard) regarding Block Ack from the STA acquired immediately before.

The BAR information is Block Ack information (conforming to the standard) from the STA acquired immediately before.

Note that, in a case where Block Ack is received from a plurality of the STAs, the block Ack may be shared in a form different from the form received from the STA, such as a change to the form of Multi-STA Block Ack on an AP side.

Furthermore, when the MAP-MSDU can be counted by the reception destination AP, even if the Header is not added to the Data MAP-MSDU portion, the AP may estimate the sequence number and respond using this Ack Information frame. In this case, the AP on a transmission side of the MAP-MSDU may use or ignore the estimated sequence number.

### < Processing of AP transmitting MAP-MSDU >

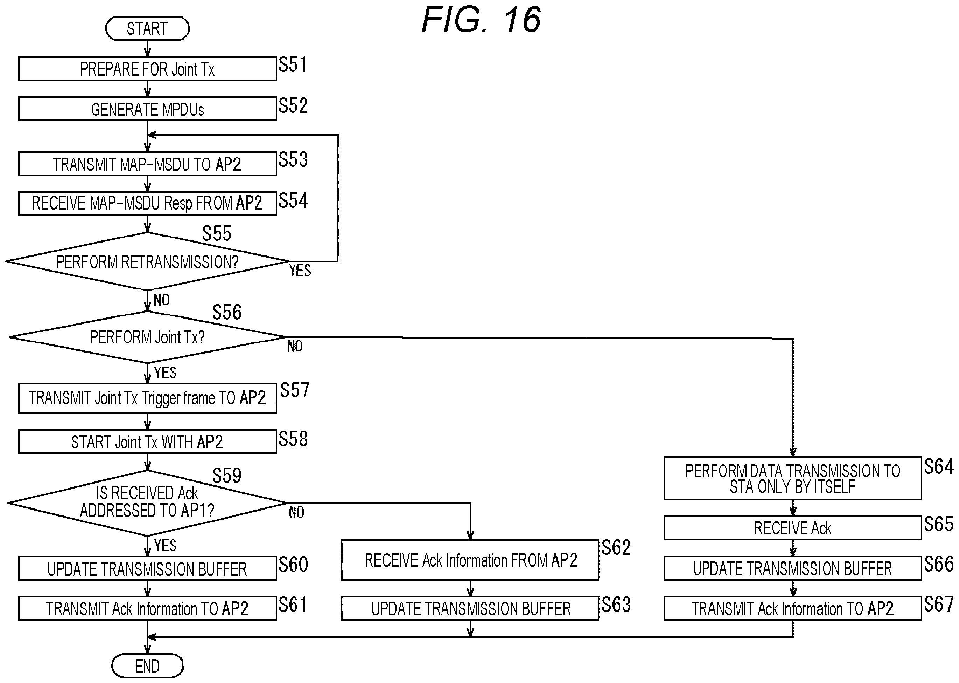

Fig. 16 is a flowchart illustrating processing of an AP (in the case of Fig. 7, AP1) that transmits a MAP-MSDU.

First, after acquiring the transmission right, the communication control unit 55 of the AP1 prepares for the Joint Tx in step S51.

The preparation described herein indicates processing for determining to which STA to perform the Joint Tx in cooperation with which AP. If necessary, the AP1 may request the channel state and the schedule information from another AP, and determine the channel state and the schedule information by using the responded information.

Furthermore, although not illustrated in Fig. 16, in a case where the Joint Tx is impossible (There is no cooperative AP, the channel state of the destination STA is unknown, or the like), the AP1 may give up the Joint Tx and perform transmission only with the AP1.

In step S52, the signal processing unit 53 generates an MPDU to be transmitted by the Joint Tx, divides the MPDU, and generates a MAP-MSDU to be shared with the AP2 using the divided MPDU.

In step S53, the communication control unit 55 transmits the MAP-MSDU to the AP2 via the backhaul link.

In step S54, the communication control unit 55 receives the MAP-MSDU Response frame from the AP2.

In step S55, the communication control unit 55 determines whether or not to retransmit the MAP-MSDU on the basis of the Sequence Number Bitmap in the received MAP-MSDU Response frame.

Here, for example, as a condition for determining retransmission, the AP1 may determine to always perform retransmission when both of the following conditions are satisfied.

That is, (1) in a case where the cooperative AP has failed to receive one or more Control MAP-MSDUs or has failed to receive x or more Data MAP-MSDUs (Note that x may be determined by a standard or may be a device-specific value.).

(2) In a case where a retransmission upper limit is not exceeded (The retransmission upper limit value may be determined by a standard or may be a device-specific value.).

In a case where it is determined in step S55 that retransmission of the MAP-MSDU is to be performed, the processing returns to step S53 and the subsequent processing is repeated. In this case, the communication control unit 55 retransmits only the MAP-MSDU in response to the reception failure.

In a case where it is determined in step S55 that retransmission of the MAP-MSDU is performed, the processing proceeds to step S56.

In step S56, the communication control unit 55 determines whether or not to perform the Joint Tx.

Here, for example, as a condition for determining implementation of the Joint Tx, it may be set to be always performed when all of the following are satisfied. Note that here, the Joint Tx implementation determination only in the acquisition status of the MAP-MSDU is described, but implementation of the Joint Tx may be determined under other conditions.
(1) In a case where cooperative APs have successfully obtained all Control MAP-MSDUs
(2) In a case where the cooperative AP has successfully obtained all Data MAP-MSDUs, or in a case where the sequence numbers of the MAP-MSDUs that the cooperative AP has successfully obtained are known

In a case where it is determined in step S56 that the Joint Tx is performed, the processing proceeds to step S57.

In step S57, the communication control unit 55 transmits a Joint Tx Trigger frame to the AP2.

In step S58, the communication control unit 55 starts the Joint Tx with the AP2.

In step S59, the communication control unit 55 determines whether or not the Ack received from the STA is addressed to AP1. In a case where it is determined in step S59 that the Ack received from the STA is addressed to the AP1, the processing proceeds to step S60.

In step S60, the communication control unit 55 updates its own transmission buffer.

In step S61, the communication control unit 55 transmits an Ack Information frame to the AP2.

In a case where it is determined in step S59 that the Ack received from the STA is not addressed to AP1, that is, is addressed to AP2, the processing proceeds to step S62.

In step S62, the communication control unit 55 receives the Ack Information frame transmitted from the AP2.

In step S63, the communication control unit 55 updates its own transmission buffer on the basis of the received Ack Information frame.

On the other hand, in a case where it is determined in step S56 that the Joint Tx is not performed, the processing proceeds to step S64.

In step S64, the communication control unit 55 performs data transmission to the destination STA only by itself.

In step S65, the communication control unit 55 receives the Ack transmitted from the STA.

In step S66, the communication control unit 55 updates the transmission buffer on the basis of the received Ack.

In step S67, the communication control unit 55 transmits an Ack Information frame to the AP2 on the basis of the received Ack. At this time, the "MAP-MSDU Delete Flag" is set to "1". This is because even if the AP2 does not implement the Joint Tx, the MAP-MSDU is likely to be stored, so that the MAP-MSDU can be normally erased from the memory.

After steps S61, S63, or S67, the processing of the AP1 in Fig. 16 ends.

Note that, although not illustrated in the flowchart of Fig. 16, for example, in a case where a certain period of time has elapsed without any response from the AP2 in any case, the communication control unit 55 may suspend all the processing related to the Joint Tx and start data transmission only with the AP1.

### < Processing of AP transmitting MAP-MSDU >

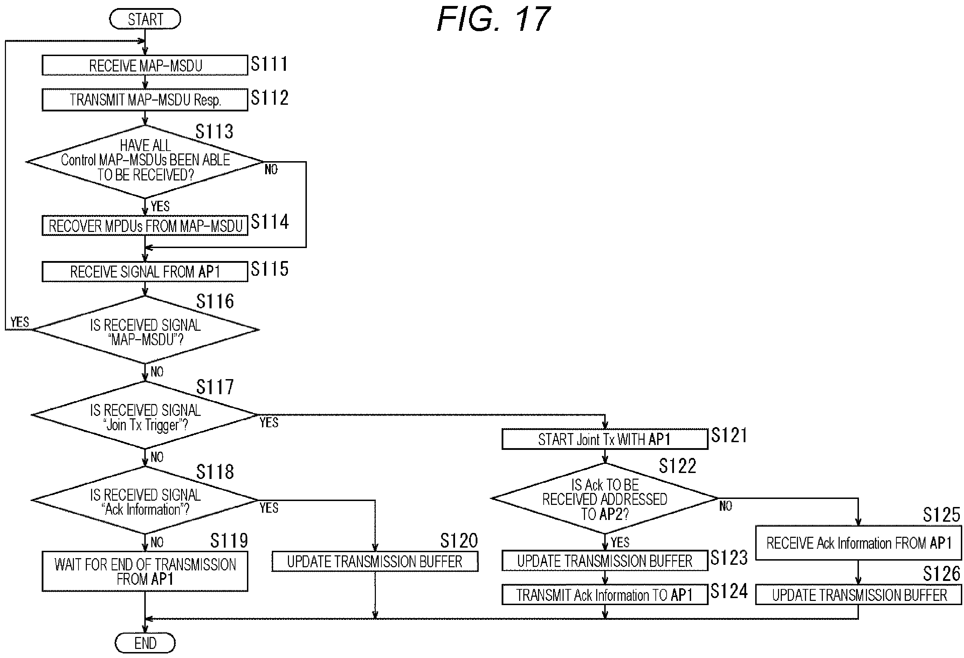

Fig. 17 is a flowchart illustrating processing of an AP (in the case of Fig. 7, AP2) that performs Joint Tx from reception of a MAP-MSDU in response to a request from another AP.

In step S111, the communication control unit 55 of the AP2 receives the MAP-MSDU transmitted from the AP1.

After the reception of all MAP-MSDUs is completed or after a certain period of time has elapsed, the communication control unit 55 transmits a MAP-MSDU Response frame to the AP2 in step S112.

In step S113, the communication control unit 55 determines whether or not all Control MAP-MSDUs have been acquired. In a case where it is determined in step S113 that all Control MAP-MSDUs have been acquired, the processing proceeds to step S114.

In step S114, the communication control unit 55 recovers MPDUs from the MAP-MSDU on the basis of the acquired information.

In a case where it is determined in step S113 that not all the Control MAP-MSDUs have been acquired, the processing skips step S114 and proceeds to step S115.

Note that in a case where some Data MAP-MSDUs cannot be acquired, the MPDU may be recovered only by the successfully-acquired Data MAP-MSDUs.

In step S115, the communication control unit 55 receives a signal transmitted from the AP1.

In step S116, the communication control unit 55 determines whether or not the received signal is a "MAP-MSDU". In a case where it is determined in step S116 that the received signal is the "MAP-MSDU", the processing returns to step S111, and the subsequent processing is repeated.

In a case where it is determined in step S116 that the received signal is not the "MAP-MSDU", the processing proceeds to step S117.

In step S117, the communication control unit 55 determines whether or not the received signal is a Joint Tx Trigger. In a case where it is determined in step S117 that the received signal is not the Joint Tx Trigger, the processing proceeds to step S118.

In step S118, the communication control unit 55 determines whether or not the received signal is Ack Information. In a case where the received signal is not the Ack Information, the processing proceeds to step S119.

In step S119, the communication control unit 55 waits for the end of the transmission from the AP1.

In a case where it is determined in step S118 that the received signal is the Ack Information, the processing proceeds to step S120.

In step S120, the communication control unit 55 updates the transmission buffer on the basis of the received Ack Information.

After step S119 or S120, the processing of Fig. 17 ends.

On the other hand, in a case where it is determined in step S117 that the received signal is the Joint Tx Trigger, the processing proceeds to step S121.

In step S121, the communication control unit 55 starts the Joint Tx with the AP1.

In step S122, the communication control unit 55 determines whether or not the Ack to be received is addressed to the AP2. In a case where it is determined in step S122 that the Ack to be received is addressed to the AP2, the processing proceeds to step S123.

In step S123, the communication control unit 55 updates the transmission buffer on the basis of the Ack.

In step S124, the communication control unit 55 transmits Ack Information to the AP1 on the basis of the Ack.

Furthermore, in step S122, in a case where it is determined that the Ack to be received is not addressed to the AP2 but is addressed to the AP1, the processing proceeds to step S125.

In step S125, the communication control unit 55 receives Ack Information transmitted from the AP1.

In step S126, the communication control unit 55 updates the transmission buffer on the basis of the Ack Information transmitted from the AP1.

After step S124 or S126, the processing of Fig. 17 ends.

Note that, although not illustrated in Fig. 17, for example, in a case where a certain period of time has elapsed without any response from the AP1 in any case, all processing related to the Joint Tx may be interrupted, and the subsequent signals may be ignored.

### < Processing of STA >

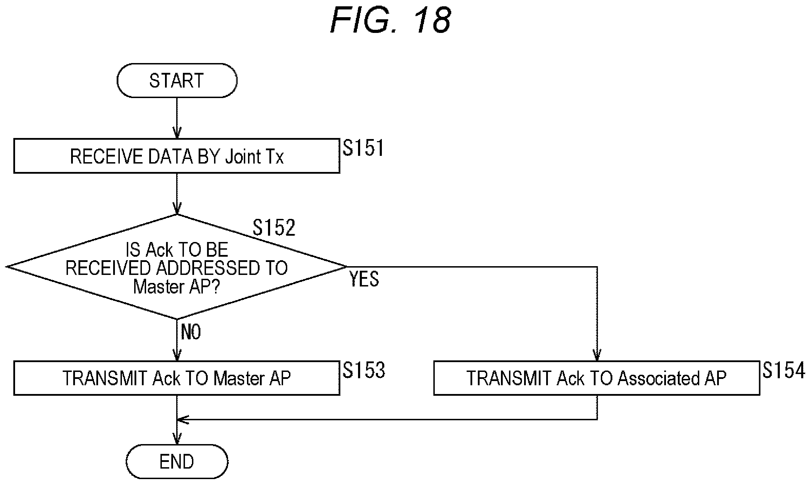

Fig. 18 is a flowchart illustrating processing of an STA that receives a data signal by the Joint Tx.

Fig. 18 illustrates that at the time of data reception by the Joint Tx, the STA responds with Ack to a designated destination (Master AP or Associated (connection destination) AP). Note that the Master AP is an AP that instructs the Joint Tx among APs that perform data transmission by the Joint Tx, and corresponds to the AP1 in the case of Fig. 7. The Associated AP is an AP that is not a Master AP among APs that perform data transmission by the Joint Tx, and corresponds to the AP2 in the case of Fig. 7.

Note that the destination designation of Ack may be included in the header information at the time of Joint Tx, or may be set in another form in advance. Furthermore, in a case where there is a management AP that manages a plurality of APs that perform the Joint Tx, the destination designation of Ack may be the management AP.

That is, in step S151 of Fig. 18, the communication control unit 155 of the STA receives the data by the Joint Tx.

In step S152, the communication control unit 155 determines whether or not the Ack to be transmitted is addressed to the Master AP. In a case where it is determined in step S152 that the Ack to be transmitted is addressed to the Master AP, the processing proceeds to step S153.

In step S153, the communication control unit 155 transmits the Ack to the Master AP.

In a case where it is determined in step S152 that the Ack to be transmitted is not addressed to the Master AP, the processing proceeds to step S154.

In step S154, the communication control unit 155 transmits the Ack to the Associated AP.

After step S153 or S154, the processing of Fig. 18 ends.

### <3. Others>

### <Effects of present technology>

In the present technology, shared data (MPDU) shared with another communication device in order to perform cooperative transmission to a communication terminal is divided for each information type in the shared data, and a data unit (MAP-MSDU) less than or equal to a maximum transmission unit in a transmission path (backhaul link) is generated. As a result, shared data for cooperative transmission can be divided more efficiently.

Furthermore, by dividing the header information in the MPDU for each type and transmitting the header information as an information group different from the data, it is possible to minimize an increase in the number of packets after the division processing. Moreover, by dividing and transmitting the MPDU for each information type, for example, even if some packets are lost, it is possible to perform the Joint Tx with only other packets excluding the lost packets, and the present technology is also excellent from the viewpoint of error concealment.

Furthermore, even in a communication scheme in which the MTU size of the backhaul link is not strict (for example, an Ether cable at the time of application of a jumbo frame defined in a wireless LAN or IEEE802.3), the entire information amount can be suppressed by collectively transmitting only the common information of the MAC header information or deleting the FCS and the header information according to the reliability of the backhaul link.

Therefore, according to the present technology, it is possible to reduce the amount of information to be transmitted via the backhaul link, as compared with the case where the header is added to all the MPDUs and transmitted as in the related art. The present technology can exhibit an effect regardless of the communication scheme of the backhaul link.

### <Configuration example of computer>

The series of processing described above can be executed by hardware and also can be executed by software. In a case where the series of processing is executed by software, a program included in the software is installed from a program recording medium to a computer incorporated in dedicated hardware, a general-purpose personal computer, or the like.

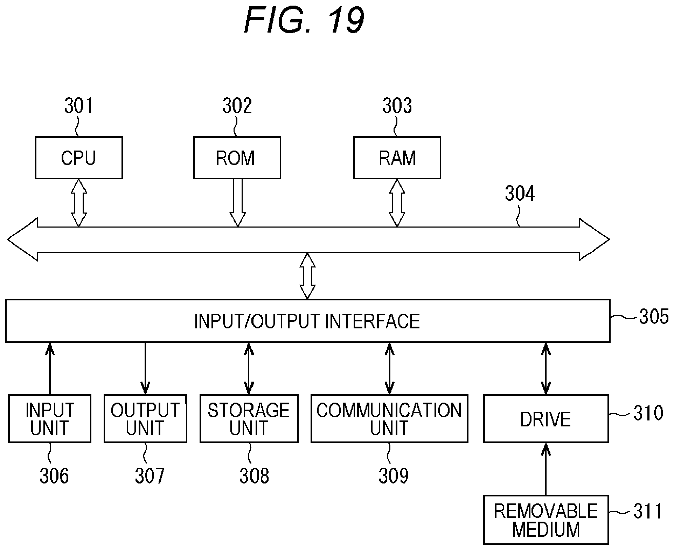

Fig. 19 is a block diagram illustrating a configuration example of the hardware of the computer that executes the above-described series of processing in accordance with the program.

A central processing unit (CPU) 301, a read only memory (ROM) 302, and a random access memory (RAM) 303 are mutually connected by a bus 304.

Moreover, an input/output interface 305 is connected to the bus 304. An input unit 306 including a keyboard, a mouse, and the like, and an output unit 307 including a display, a speaker, and the like are connected to the input/output interface 305. Furthermore, a storage unit 308 including a hard disk, a nonvolatile memory, or the like, a communication unit 309 including a network interface or the like, and a drive 310 that drives a removable medium 311 are connected to the input/output interface 305.

In the computer configured as described above, the series of processing described above is performed, for example, by the CPU 301 loading the program stored in the storage unit 308 into the RAM 303 via the input/output interface 305 and the bus 304 and executing the program.

The program to be executed by the CPU 301 is provided, for example, by being recorded on the removable medium 311 or via a wired or wireless transmission medium such as a local area network, the Internet, or digital broadcasting and is installed in the storage unit 308.

Note that, the program executed by the computer may be a program that is processed in time series in the order described in the present specification, or a program that is processed in parallel or at a necessary timing such as when a call is made.

Note that, in the present specification, a system means an assembly of a plurality of components (devices, modules (parts), and the like), and it does not matter whether or not all the components are located in the same housing. Therefore, a plurality of devices housed in separate housings and connected to each other via a network and one device in which a plurality of modules is housed in one housing are both systems.

Furthermore, the effects described in the present specification are merely examples and not restrictive, and there may also be other effects.

An embodiment of the present technology is not limited to the above-described embodiment, and various modifications can be made without departing from the scope of the present technology.

For example, the present technology may be configured as cloud computing in which one function is shared by a plurality of devices via a network and processed in cooperation.

Furthermore, each step described in the above flowcharts can be executed by one device or shared and performed by a plurality of devices.

Moreover, in a case where a plurality of processing steps is included in one step, the plurality of processing included in the one step can be performed by one device or shared and performed by a plurality of devices.

### <Combination example of configurations>

The present technology may also have the following configurations.
(1)
   A communication device including
   a signal processing unit that divides shared data to be shared with another communication device for each information type in the shared data in order to perform cooperative transmission to a communication terminal, and generates a data unit less than or equal to a maximum transmission unit in a transmission path.
(2)
   The communication device according to (1) described above, further including
   a communication control unit that notifies the another communication device of information indicating a method of dividing header information included in the shared data.
(3)
   The communication device according to (2) described above, in which
   the signal processing unit divides the shared data into at least a part of the header information and payload information of the shared data.
(4)
   The communication device according to (2) or (3) described above, in which
   the signal processing unit divides the header information into information common to a plurality of the data units to be concatenated and individual information by the plurality of data units to be concatenated.
(5)
   The communication device according to (2) described above, in which
   the communication control unit notifies the another communication device of a method of generating or dividing an error correction code.
(6)
   The communication device according to (5) described above, in which
   the communication control unit divides the error correction code separately from payload information of the shared data.
(7)
   The communication device according to (5) or (6) described above, in which
   the communication control unit requests the another communication device to generate the error correction code.
(8)
   The communication device according to (2) described above, in which
   the communication control unit notifies the another communication device of a total number of divisions of the shared data.
(9)
   The communication device according to (8) described above, in which
   as the total number of divisions, a total number of divisions of the header information and a total number of divisions of payload information of the shared data are notified.
(10)
   The communication device according to any one of (1) to (9) described above, in which
   the signal processing unit generates the data unit by adding header information for cooperation to the divided shared data.
(11)
   The communication device according to (10) described above, in which
   the header information for cooperation includes at least one of an information type and a sequence number of the shared data.
(12)
   The communication device according to any one of (1) to (11) described above, in which
   the communication control unit performs control to transmit a signal requesting the another communication device to delete the shared data from a memory.
(13)
   A communication method performed by a communication device, the communication method including
   dividing shared data to be shared with another communication device for each information type in the shared data in order to perform cooperative transmission to a communication terminal, and generating a data unit less than or equal to a maximum transmission unit in a transmission path.
(14)
   A communication device including
   a signal processing unit that divides shared data to be shared with another communication device for each information type in the shared data in order to perform cooperative transmission to a communication terminal, and recovers the shared data from a data unit generated using the divided shared data, the data unit being less than or equal to a maximum transmission unit in a transmission path.
(15)
   The communication device according to (14) described above, in which
   the signal processing unit calculates an error correction code in response to a request from the another communication device and adds the error correction code to the data unit.
(16)
   The communication device according to (14) or (15) described above, in which
   the signal processing unit responds with information regarding the data unit that has been successfully received on the basis of a sequence number in header information for cooperation of the data unit generated by adding the header information for cooperation to the divided shared data.
(17)
   A communication method performed by a communication device, the communication method including
   dividing shared data to be shared with another communication device for each information type in the shared data in order to perform cooperative transmission to a communication terminal, and recovering the shared data from a data unit generated using the divided shared data, the data unit being less than or equal to a maximum transmission unit in a transmission path.
(18)
   A communication terminal including
   a communication control unit that performs control to transmit an Ack to a designated destination when cooperative transmission packets transmitted from a plurality of communication devices are received.
(19)
   The communication terminal according to (18) described above, in which
   the communication control unit performs control to transmit the Ack to the designated destination among the plurality of communication devices.
(20)
   A communication method performed by a communication terminal, the communication method including
   performing control to transmit an Ack to a designated destination when cooperative transmission packets transmitted from a plurality of communication devices are received.

### REFERENCE SIGNS LIST

- 1: Wireless communication system
- 11: Communication device
- 31: Wireless communication unit
- 32: Control unit
- 33: Storage unit
- 34: WAN communication unit
- 41: Antenna
- 51: Amplification unit
- 52: Wireless interface unit
- 53: Signal processing unit
- 54: Data processing unit
- 55: Communication control unit
- 56: Communication storage unit
- 71: Encryption/decryption processing unit
- 72: Header + CRC processing unit
- 73: A-MPDU processing unit
- 74: MAP-MSDU processing unit
- 111: Communication device
- 131: Wireless communication unit
- 132: Control unit
- 133: Storage unit
- 134: WAN communication unit
- 141: Antenna
- 151: Amplification unit
- 152: Wireless interface unit
- 153: Signal processing unit
- 154: Data processing unit
- 155: Communication control unit
- 156: Communication storage unit

## Claims

1. A communication device comprising
a signal processing unit that divides shared data to be shared with another communication device for each information type in the shared data in order to perform cooperative transmission to a communication terminal, and generates a data unit less than or equal to a maximum transmission unit in a transmission path.

2. The communication device according to claim 1, further comprising
a communication control unit that notifies the another communication device of information indicating a method of dividing header information included in the shared data.

3. The communication device according to claim 2, wherein
the signal processing unit divides the shared data into at least a part of the header information and payload information of the shared data.

4. The communication device according to claim 2, wherein
the signal processing unit divides the header information into information common to a plurality of the data units to be concatenated and individual information by the plurality of data units to be concatenated.

5. The communication device according to claim 2, wherein
the communication control unit notifies the another communication device of a method of generating or dividing an error correction code.

6. The communication device according to claim 5, wherein
the communication control unit divides the error correction code separately from payload information of the shared data.

7. The communication device according to claim 5, wherein
the communication control unit requests the another communication device to generate the error correction code.

8. The communication device according to claim 2, wherein
the communication control unit notifies the another communication device of a total number of divisions of the shared data.

9. The communication device according to claim 8, wherein
as the total number of divisions, a total number of divisions of the header information and a total number of divisions of payload information of the shared data are notified.

10. The communication device according to claim 1, wherein
the signal processing unit generates the data unit by adding header information for cooperation to the divided shared data.

11. The communication device according to claim 10, wherein
the header information for cooperation includes at least one of an information type and a sequence number of the shared data.

12. The communication device according to claim 2, wherein
the communication control unit performs control to transmit a signal requesting the another communication device to delete the shared data from a memory.

13. A communication method performed by a communication device, the communication method comprising
dividing shared data to be shared with another communication device for each information type in the shared data in order to perform cooperative transmission to a communication terminal, and generating a data unit less than or equal to a maximum transmission unit in a transmission path.

14. A communication device comprising
a signal processing unit that divides shared data to be shared with another communication device for each information type in the shared data in order to perform cooperative transmission to a communication terminal, and recovers the shared data from a data unit generated by using the divided shared data, the data unit being less than or equal to a maximum transmission unit in a transmission path.

15. The communication device according to claim 14, wherein
the signal processing unit calculates an error correction code in response to a request from the another communication device and adds the error correction code to the data unit.

16. The communication device according to claim 14, wherein
the signal processing unit responds with information regarding the data unit that has been successfully received on a basis of a sequence number in header information for cooperation of the data unit generated by adding the header information for cooperation to the divided shared data.

17. A communication method performed by a communication device, the communication method comprising
dividing shared data to be shared with another communication device for each information type in the shared data in order to perform cooperative transmission to a communication terminal, and recovering the shared data from a data unit generated by using the divided shared data, the data unit being less than or equal to a maximum transmission unit in a transmission path.

18. A communication terminal comprising
a communication control unit that performs control to transmit an Ack to a designated destination when cooperative transmission packets transmitted from a plurality of communication devices are received.

19. The communication terminal according to claim 18, wherein
the communication control unit performs control to transmit the Ack to the designated destination among the plurality of communication devices.

20. A communication method performed by a communication terminal, the communication method comprising
performing control to transmit an Ack to a designated destination when cooperative transmission packets transmitted from a plurality of communication devices are received.
